Europäisches Patentamt

European Patent Office

Office européen des brevets

(11) Publication number: **0 148 255**
**B1**

(12) EUROPEAN PATENT SPECIFICATION

(45) Date of publication of patent specification: **13.09.89**

(21) Application number: **84902719.8**

(22) Date of filing: **09.07.84**

(86) International application number:
**PCT/GB84/00245**

(87) International publication number:
**WO 85/00493 31.01.85 Gazette 85/03**

(51) Int. Cl.⁴: **H 04 N 11/08**

(54) METHOD AND APPARATUS FOR ENHANCING VERTICAL CHROMINANCE RESOLUTION.

(30) Priority: **08.07.83 GB 8318601**

(43) Date of publication of application:
**17.07.85 Bulletin 85/29**

(45) Publication of the grant of the patent:
**13.09.89 Bulletin 89/37**

(84) Designated Contracting States:
**AT BE CH DE FR GB LI LU NL SE**

(56) References cited:
**SMPTE JOURNAL, vol. 92, no. 5, May 1983,
(Scarsdale, N.Y. US). Sandbank et al.: "High-
definition television and compatability with
existing standards"; pages 582-561**

**NHK TECHNICAL MONOGRAPH, no. 32, June
1982 (Tokyo, JP). Nishizawa et al.: "New
approach to research and devlopment of
high-definition television", pages 93-101**

(73) Proprietor: **INDEPENDENT BROADCASTING
AUTHORITY
70 Brompton Road
London SW3 1EY (GB)**

(72) Inventor: **TONGE, Gary, James
38 Burley Road Harestock
Winchester, S022 6LJ (GB)**

(74) Representative: **Crawford, Andrew Birkby et al
A.A. THORNTON & CO. Northumberland House
303-306 High Holborn
London WC1V 7LE (GB)**

## Description

The present invention relates to the transmission and reception of colour television signals in component form and more particularly to a method and apparatus for handling the chrominance components of the signals.

The present invention will be described in relation to a component television sign signal known as a Multiplexed Analogue Component (M.A.C.) signal although this is but one application of the present invention.

Colour television signals produced by the conventional method of 625-line interlaced scanning suffer from a number of defects which are visible in the displayed image and limit image quality. One noteable defect is temporal aliasing, arising from the 50 field, 25 frame/second scan, which is visible in the displayed image as a 25Hz flicker on high vertical spatial frequencies.

One high definition, or extended definition, system which has been proposed, e.g. in the article "An Extensible Family of Standards by E. J. Wilson and G. Tonge at pages 13-15 of IBA Technical Renew No. 16, which is applicable to colour television signals in component form is to produce a television signal using a 625-line sequential scan to give 50 frames/second. Temporal aliasing would be reduced in the displayed image producing a 50Hz flicker which is much less objectionable. Furthermore vertical luminance and chrominance resolution would be improved by the doubling of the Nyquist limiting frequencies.

However to implement such a high definition television system special scanning, transmitting, receiving and display apparatus operating at twice the normal speed would be required. The high definition television signals would not be displayable on conventional television sets.

The present invention allows an improvement in the quality of an image represented by a colour television signal in component form and the signal produced is transmissible in the same format as a standard signal in component form corresponding to a line interlaced scan; the improved image quality arising from improved vertical chrominance resolution.

The present invention provides a method of producing a colour television signal in component form comprising the steps of:

a) scanning a scene,

b) generating luminance and two types of colour difference component signals representing the scene such that:

each luminance or colour difference component signal relates to a line in one of a plurality of fields of a non-interlaced two field per frame representation .of the scanned scene, the luminance component signals relate to every other active line in one field of each frame and to every other active line in the other field of each frame of the representation of the scanned scene, the lines in said one field to which luminance component signals relate being interlaced with the lines in said other field to which luminance component signals relate, the colour difference component signals relate to every other active line in each field of the representation of the scanned scene and alternate in type within each field, the colour difference component signals relating to the first of said every other lines in each frame being controlled to be of the same type, and the colour difference component signals relating to lines in said one field of each frame relate to substantially the same lines as the luminance component signals relating to said one field of each frame, and

c) time multiplexing luminance and colour difference component signals to form a colour television signal in component form; characterised in that the generated colour difference component signals relating to said other field of each frame relate to substantially the same lines as the colour difference component signals relating to said one field of each frame;

and each colour difference component signal relating to a line of a field of said representation is of a different type from the colour difference component signals relating to the corresponding line of the adjacent fields of the representation.

The present invention also provides a method of receiving a colour television signal in component form comprising time multiplexed luminance and colour difference component signals representing a scene, each luminance or colour difference component signal relating to a line in one of a plurality of fields of a non-interlaced two field per frame representation of the scene, comprising the steps of:

a) receiving the colour television signal in component form;

b) demultiplexing the luminance and two types of colour difference component signals in the received signal,

the demultiplexed luminance component signals relating to every other active line in one field of each frame and to every other active line in the other field of each frame of said representation of the scene, the lines in said one field to which luminance component signals relate being interlaced with the lines in said other field to which luminance component signals relate, the demultiplexed colour difference component signals relating to every other active line in each field of said representation and alternating in type within each field, the demultiplexed colour difference component signals relating to substantially the same lines in said other field of each frame as the demultiplexed luminance component signals relating to said one field of each frame, and the demultiplexed colour difference component signals relating to the first of said every other lines in each frame being controlled to be of the same type;

c) outputting the luminance and two types of colour difference component signals to a television display;

characterised in that the demultiplexed colour difference component signals relating to said other field of each frame relate to substantially the same lines as the colour difference component signals relating to said one field of each frame of the representation of the scene, each demultiplexed colour difference component signal relating to a line of a field of said representation is of a different type from the demultiplexed colour difference component signals relating to the corresponding line of the adjacent fields, and in that there is further provided the step of interpolating using the demultiplexed colour difference component signals to obtain further colour difference component signals relating to lines in the frame different from the demultiplexed colour difference component signals.

Features and advantages of the present invention will be apparent from the following description of an embodiment thereof when taken in conjunction with the accompanying drawings, in which:

Figure 1 shows diagrammatically the line structure from the chrominance components of a MAC-type signal.

Figure 2 shows a graph representing the repeat spectra in vertical and temporal frequency produced by the line structure of Figure I;

Figure 3 shows diagrammatically the proposed type of chrominance line structure;

Figure 4 shows a graph representing the repeat spectra in vertical and temporal frequency produced by the line structure of Figure 3;

Figure 5 shows a diagrammatic representation of a filter producing line structure shown in Figure 3; and

Figure 6 shows the characteristic of the filter shown in Figure 5.

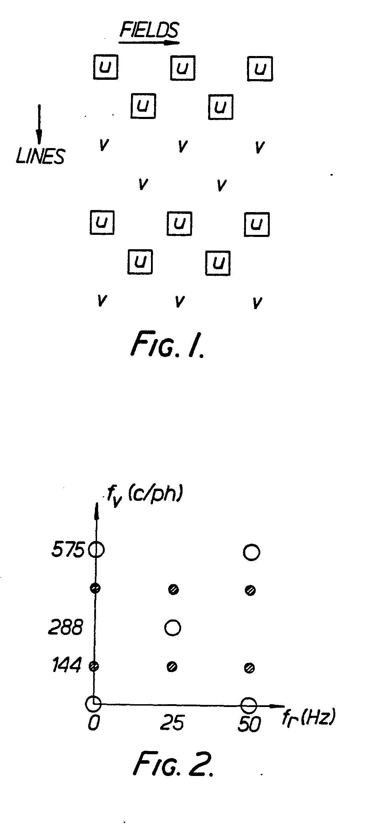

MAC is defined to code the two colour difference components (U and V in Europe) on alternate lines with a frame-reset sequence. This sequence is illustrated in Figure 1.

There are sound reasons why this sequence has been selected in place of the alternative four-field sequence which is not reset each frame. The main reason is that residual alias components in the frame-reset case are much less disturbing. In addition, if such a signal were ever to be processed in the studio then its two-field sequence would be easier to handle than a four-field sequence. An implication of using this sequence however is that the vertical chrominance resolution is limited to a quarter of the luminance vertical resolution capability. This is because effectively there are only 144 (575/4) vertical samples of each colour in an active picture scan whereas there are 575 active vertical samples of luminance. In order to achieve the full vertical resolution afforded by the 575 lines, field stores are required in the receiver. Nevertheless even if this complexity is allowed for colour the vertical chrominance resolution is still limited to that offered by 144 lines.

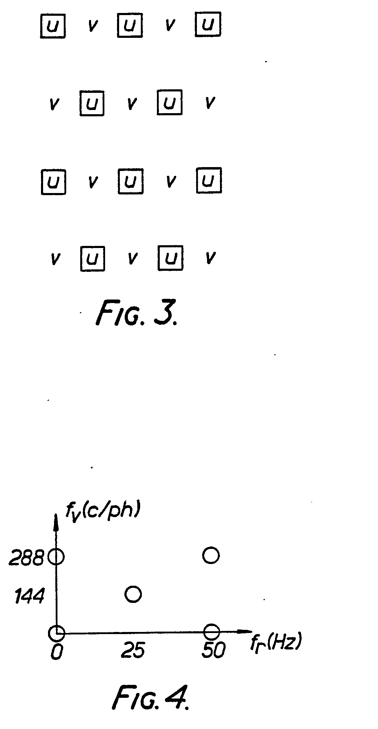

In frequency terms this limitation is evident by considering the repeat spectra (in vertical and temporal frequency) generated by this alternate line sequence, as illustrated in Figure 2.

The open circles are those repeats arising from the 625 interlace scan. The extra repeats introduced by alternate line omission in a frame reset fashion are illustrated by the shaded circles. These repeat spectra are half-amplitude but nevertheless they impose a Nyquist limiting vertical chrominance frequency of 72 cycles per picture height (equivalent to 1.8 MHz horizontally). In practice the chrominance vertical resolution obtained after pre- and post- filtering is equivalent to 1.1 MHz horizontally (-3dB).

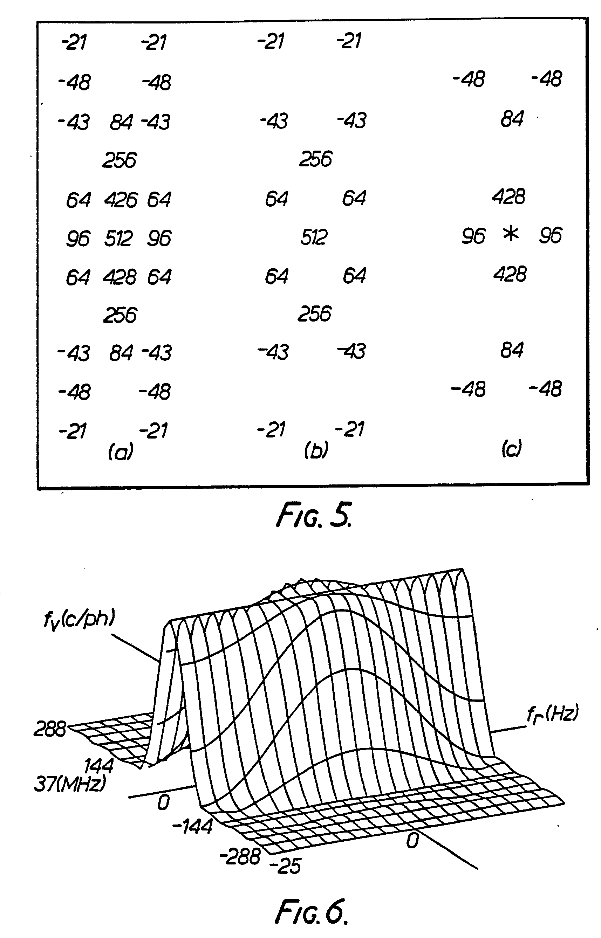

If we wish to maintain a frame-reset sequence for transmission, techniques for achieving a vertical chrominance resolution greater than the Nyquist limit described above are not obvious. Nevertheless the following line of thought gives a clue to a possibility — with the current approach there appears to be a paradox. Although there are half as many lines of each colour difference component as there are of luminance, the available vertical resolution is only a quarter as great. As we have seen, this is due to the sampling structure formed by the chrominance lines. If we conceive of a chrominance line structure which is analogous to the luminance structure, except that it is halved in density vertically, then we arrive at a $312\frac{1}{2}$-line interlace structure. Two such structures (one for each colour difference component) are illustrated interleaved in Figure 3.

In this case there are 288 (575/2) vertical samples of each colour difference component, just as there are 575 for the luminance. In frequency terms, the repeat spectra appropriate to such a line-structure are shown in Figure 4. In this case the "Nyquist-limit" vertically is 144c/ph (equivalent to 3.7MHz horizontally). As with the luminance, field store processing is required in order to achieve this increased resolution.

The relationship between the line-structure of Figure 3 and the MAC frame-reset structure of Figure 1 is a simple one. A vertical shift upwards of alternate fields in the interlace structure (Figure 3) by a "frame-line" (i.e. 1/575 of a picture height) yields the frame-reset structure (Figure 1). It is thus possible for a $312\frac{1}{2}$ line interlaced chrominance structure (Figure 3) to be transmitted in a 625-interlace alternate-line frame-reset format (Figure 1). A "conventional receiver" would process these colour lines as a true frame-reset structure (thus alternate fields would have a minor vertical shift) while a higher definition receiver would treat the lines as being part of the $312\frac{1}{2}$ line interlaced chrominance structure and this achieve an increased vertical resolution.

A higher definition receiver would receive the Figure 3 chrominance structure and undertake scan conversion to derive a $312\frac{1}{2}$ line interlaced chrominance structure. This provides a greater basis of information for subsequent vertical interpolation to provide a 625 line sequential chrominance structure for combination with the 625 line sequential luminance structure such a receiver would also produce.

If the source of chrominance signals is a special source such as a special camera, it is possible for the chrominance structure as shown in Figure 3 to be available directly from the source. If the source scans with the basic 625 line interlaced structure then the lines in alternate fields of the colour structure of Figure 3 are not available. In this case, therefore, values need to be interpolated. This interpolator can be prefilter which shapes the vertical-temporal frequency spectrum of the colour components. As an example such a prefilter has been designed which would offer a -3dB vertical bandwidth equivalent to 2.14 MHz (on stationary or horizontally moving pictures). The filter coefficients are defined on a grid of 625-sequential-scan lines as illustrated in Figure 5a, although in practice it will mean that "real lines" are filtered by the coefficients of Figure 5b and "interpolated lines" are provided by using the coefficients of Figure 5c. The vertical-temporal frequency response of such a filter is illustrated in Figure 6. If a similar post-filter is used prior to sequential i.e. non-interlace display in a higher definition receiver then the combined filter responses give a vertical resolution for stationary or horizontally moving scenes equivalent to 1.9 MHz (-3dB). For vertically moving pictures this is reduced and in the worst case (having a 25 Hz temporal frequency component) the combined response gives a resolution equivalent to 0.6 MHz (-3dB). This is of course just an example. A different filter could be used or indeed one or both of the filters could be adaptive.

The effect on a conventional receiver would be primarily that of less severe pre-filtering. The results obtained would be more like those obtained with a 1-1 pre-filter rather than with a typical alias-rejecting seven-tap pre-filter.

By using the presently proposed invention, a 625 line MAC system can provide a vertical chrominance resolution that approaches, if not equals that of a 1125 line H DTV system in its transmission format.

## Claims

1. A method of producing a colour television signal in component form, comprising the steps of:
a) scanning a scene,
b) generating luminance and two types of colour difference component signals representing the scene such that:
each luminance or colour difference component signal relates to a line in one of a plurality of fields of a non-interlaced two field per frame representation of the scanned scene, the luminance component signals relate to every other active line in one field of each frame and to every other active line in the other field of each frame of the representation of the scanned scene, the lines in said one field to which luminance component signals relate being interlaced with the lines in said other field to which luminance component signals relate, the colour difference component signals relate to every other active line in each field of the representation of the scanned scene and alternate in type within each field, the colour difference component signals relating to the first of said every other lines in each frame being controlled to be of the same type, and the colour difference component signals relating to lines in said one field of each frame relate to substantially the same lines as the luminance component signals relating to said one field of each frame, and
c) time multiplexing luminance and colour difference component signals to form a colour television signal in component form; characterised in that the generated colour difference component signals relating to said other field of each frame relate to substantially the same lines as the colour difference component signals relating to said one field of each frame;
and each colour difference component signals relating to a line of a field of said representation is of a different type from the colour difference component signals relating to the corresponding line of the adjacent fields of the representation.

2. A method according to claim 1, wherein the scanning step comprises raster scanning the scene using a two-field line-interlaced scan, and the generating step comprises generating luminance and two types of colour difference component signals indicative of parameters of the scanned lines, and passing the colour difference component signals through a filter whereby to alter the lines in said other field of each frame of said representation of the scene to which the colour difference component signals relate.

3. A method according to claim 2, wherein the step of passing the colour difference component signals through a filter comprises passing the colour difference component signals through a filter acting on the vertical temporal frequency spectrum of the colour difference component signals.

4. A method of receiving a colour television signal in component form comprising time multiplexed luminance and colour difference component signals representing a scene, each luminance or colour difference component signal relating to a line in one of a plurality of fields of a non-interlaced two field per frame representation of the scene, comprising the steps of:
a) receiving the colour television signal in component form;
b) demultiplexing the luminance and two types of colour difference component signals in the received signal,
the demultiplexed luminance component signals relating to every other active line in one field of each frame and to every other active line in the other field of each frame of said representation of the scene, the lines in said one field to which luminance component signals relate being interlaced with the lines in said other field to which luminance component signals relate, the demultiplexed colour difference component signals relating to every other active line in each field of said representation and alternating in type within each field, the demultiplexed colour difference component signals relating to substantially the same lines in said one field of each frame as the demultiplexed luminance component signals relating to said one field of each frame, and the demultiplexed colour difference component signals relating to the first of said every other lines in each frame being controlled to be of the same type;

c) outputting the luminance and two types of colour difference component signals to a television display;

characterised in that the demultiplexed colour difference component signals relating to said other field of each frame relate to substantially the same lines as the colour difference component signals relating to said one field of each frame of the representation of the scene, each demultiplexed colour difference component signal relating to a line of a field of said representation is of a different type from the demultiplexed colour difference component signals relating to the corresponding line of the adjacent fields, and in that there is further provided the step of interpolating using the demultiplexed colour difference component signals to obtain further colour difference component signals the further colour difference component signals relating to lines in the frame different from the demultiplexed colour difference component signals.

## Patentansprüche

1. Verfahren zum Erzeugen eines Farbfernsehsignals in Komponentenform, umfassend die Schritte:

a) Abtasten einer Szene,

b) Erzeugen von Luminanz- und zwei Arten von Farbdifferenzkomponentensignalen, die die Szene darstellen derart, daß:

jedes Luminanz- oder Farbdifferenzkomponentensignal sich auf eine Zeile in einem aus einer Vielzahl von Teilbildern einer nicht verschachtelten Darstellung der abgetasteten Szene in zwei Teilbildern pro Vollbild bezieht, die Luminanzkomponentensignale sich auf jede zweite aktive Zeile in einem Teilbild eines jeden Vollbildes und auf jede zweite aktive Zeile in dem anderen Teilbild eines jeden Vollbildes der Darstellung der abgetasteten Szene beziehen, die Zeilen in dem genannten einen Teilbild, zu welchem Luminanzkomponentensignale gehören, mit den Zeilen in dem anderen Teilbild, zu welchem Luminanzkomponentensignale gehören, verschachtelt sind, die Farbdifferenzkomponentensignale sich auf jede zweite aktive Zeile in jedem Teilbild der Darstellung der abgetasteten Szene beziehen und in der Art innerhalb jedes Teilbildes alternieren, die Farbdifferenzkomponentensignale, die sich auf die erste der genannten abwechselnden Zeilen in jedem Vollbild beziehen, so gesteuert werden, daß sie von derselben Art sind, und die Farbdifferenzkomponentensignale, die sich auf Zeilen in dem einen Teilbild eines jeden Vollbildes beziehen, sich im wesentlichen auf dieselben Zeilen wie die Luminanzkomponentensignale beziehen, die zu dem genannten einen Teilbild eines jeden Rahmens gehören, und

c) die Luminanz- und Farbdifferenzkomponentensignale zeitmultiplexiert werden, um ein Farbfernsehsignal in Komponentenform zu bilden; dadurch gekennzeichnet, daß die erzeugten Farbdifferenzkomponentensignale, die sich auf das andere Teilbild eines jeden Vollbildes beziehen, sich im wesentlichen auf dieselben Zeilen beziehen, wie die Farbdifferenzkomponentensignale, die zu dem genannten einen Teilbild eines jeden Vollbildes gehören;

und jedes Farbdifferenzkomponentensignal, das sich auf eine Zeile eines Teilbildes der genannten Darstellung bezieht, von anderer Art als die Farbdifferenzkomponentensignale ist, die sich auf die entsprechende Zeile der benachbarten Teilbilder der Darstellung beziehen.

2. Verfahren nach Anspruch 1, wobei der Abtastschritt die Rasterabtastung der Szene unter Verwendung einer Zeilensprungabtastung von zwei Teilbildern umfaßt, und der Erzeugungsschritt das Erzeugen von Luminanz- und zwei Arten von Farbdifferenzkomponentensignalen umfaßt, die für Parameter der abgetasteten Zeilen kennzeichnend sind, und das Durchleiten der Farbdifferenzkomponentensignale durch ein Filter, um dadurch die Zeilen in dem genannten anderen Teilbild eines jeden Vollbildes der Darstellung der Szene zu verändern, zu dem die Farbdifferenzkomponentensignale gehören.

3. Verfahren nach Anspruch 2, bei dem der Schritt des Durchleitens der Farbdifferenzkomponentensignale durch ein Filter das Durchleiten der Farbdifferenzkomponentensignale durch ein Filter umfaßt, das auf das vertikal/temporale Frequenzspektrum der Farbdifferenzkomponentensignale einwirkt.

4. Verfahren zum Empfangen eines Farbfernsehsignals in Komponentenform, enthaltend zeitmultiplexierte Luminanz- und Farbdifferenzkomponentensignale, die eine Szene darstellen, wobei sich jedes Luminanz- oder Farbdifferenzkomponentensignal auf eine Zeile in einem aus einer Vielzahl von Teilbildern einer Darstellung mit zwei nicht verschachtelten Teilbildern pro Vollbild der Szene bezieht, umfassend die folgenden Schritte:

a) Empfangen des Farbfernsehsignals in Komponentenform;

b) Demultiplexieren der Luminanz- und der zwei Arten von Farbdifferenzkomponentensignale in dem empfangenen Signal,

wobei die demultiplexierten Luminanzkomponentensignale zu jeder zweiten aktiven Zeile in einem Teilbild eines jeden Vollbilds und zu jeder zweiten aktiven Zeile in dem anderen Teilbild eines jeden Vollbildes der genannten Darstellung der Szene gehören, die Zeilen in dem genannten einen Teilbild, zu welchem die Luminanzkomponentensignale gehören, mit den Zeilen in dem anderen Teilbild, zu dem Luminanzkomponentensignale gehören, verschachtelt sind, die demultiplexierten Farbdifferenzkomponentensignale zu jeder zweiten aktiven Zeile in jedem Teilbild der Darstellung gehören und in der Art innerhalb eines jeden Teilbildes abwechseln, die demultiplexierten Farbdifferenzkomponentensignale zu im wesentlichen denselben Zeilen in dem anderen Teilbild eines jeden Vollbildes gehören, wie die demultiplexierten Luminanzkomponentensignale, die zu dem genannten einen Teilbild eines jeden Vollbildes gehören, und die demultiplexierten Farbdifferenzkomponentensignale, die sich auf die erste der genannten abwechselnden Zeilen in jedem Vollbild beziehen, so gesteuert sind, daß sie von derselben Art sind;

c) Ausgeben der Luminanz- und der zwei Arten von Farbdifferenzkomponentensignale an eine Fernsehanzeigeeinrichtung;

dadurch gekennzeichnet, daß die demultiplexierten Farbdifferenzkomponentensignale, die zu dem anderen Teilbild eines jeden Vollbildes gehören, sich im wesentlichen auf dieselben Zeilen wie die Farbdifferenzkomponentensignale beziehen, die zu dem genannten einen Teilbild eines jeden Vollbildes der Darstellung der Szene gehören, jedes demultiplexierte Farbdifferenzkomponentensignal, das zu einer Zeile eines Teilbildes der Darstellung gehört, von anderer Art ist, als die demultiplexierten Farbdifferenzkomponentensignale, die zu der entsprechenden Zeile der benachbarten Teilbilder gehören, und daß weiterhin der Schritt des Interpolierens unter Verwendung der demultiplexierten Farbdifferenzkomponentensignale vorgesehen ist, um weitere Farbdifferenzkomponentensignale zu erhalten, die sich auf Zeilen in dem Vollbild beziehen und die von den demultiplexierten Farbdifferenzkomponentensignalen verschieden sind.

## Revendications

1. Procédé de production d'un signal de télévision en couleur sous forme de ses composantes, comprenant les étapes suivantes:

a) le balayage d'une scène,

b) la création de signaux de composantes de luminance et de deux types de différence de couleur représentant la scène de manière que:

chaque signal de composante de luminance ou de différence de couleur est relatif à une ligne de l'une de plusieurs trames d'une représentation à deux trames non entrelacées par image de la scène balayée, les signaux de composante de luminance sont relatifs à chaque seconde ligne active d'une première trame de chaque image et à chaque seconde ligne active de l'autre trame de chaque image de la représentation de la scène balayée, les lignes de la première trame auxquelles les signaux de composante de luminance sont relatifs étant entrelacées avec les lignes de l'autre trame auxquelles les signaux de composante de luminance sont relatifs, les signaux de composante de différence de couleur étant relatifs à chaque seconde ligne active de chaque trame de la représentation de la scène balayée et ayant des types qui alternent dans chaque trame, les signaux de composante de différence de couleur relatifs à la première des secondes lignes de chaque image étant réglés pour être du même type, et les signaux de différence de couleur relatifs aux lignes de la première trame de chaque image sont relatifs pratiquement aux mêmes lignes que les signaux de composante de luminance relatifs à la première trame de chaque image, et

c) le multiplexage dans le temps des signaux de composantes de luminance et de différence de couleur afin qu'un signal de télévision en couleur soit formé avec ses composantes, caractérisé en ce que les signaux créés de composante de différence de couleur relatifs à l'autre trame de chaque image sont relatifs pratiquement aux mêmes lignes que les signaux de composante de différence de couleur relatifs à la première trame de chaque image,

chacun des signaux de composante de différence de couleur relatifs à une ligne d'une trame de la représentation a un type différent de celui des signaux de composante de différence de couleur relatifs à la ligne correspondante des trames adjacentes de la représentation.

2. Procédé selon la revendication 1, dans lequel l'étape de balayage comprend le balayage par trame de la scène à l'aide d'un balayage à deux trames dont les lignes sont entrelacées, et l'étape de création comporte la création de signaux de composantes de luminance et de deux types de différence de couleur représentatifs des paramètres des lignes balayées, et la transmission des signaux de composante de différence de couleur dans un filtre de manière que les lignes de l'autre trame de chaque image de la représentation de la scène auxquelles les signaux de composante de différence de couleur sont relatifs soient modifiées.

3. Procédé selon la revendication 2, dans lequel l'étape de transmission des signaux de composante de différence de couleur dans un filtre comprend la transmission des signaux de composante de différence de couleur dans un filtre agissant sur le spectre de fréquences verticales temporelles des signaux de composante de différence de couleur.

4. Procédé de réception d'un signal de télévision en couleur sous forme de ses composantes, comprenant des signaux de composantes de luminance et de différence de couleur multiplexés dans le temps et représentant une scène, chaque signal de composante de luminance ou de différence de couleur étant relié à une ligne de l'une de plusieurs trames d'une représentation à deux trames non entrelacées par image, comprenant les étapes suivantes:

a) la réception du signal de télévision en couleur sous forme de ses composantes,

b) le démultiplexage des signaux de composantes de luminance et de deux types de différence de couleur dans le signal reçu,

les signaux démultiplexés de composante de luminance étant relatifs à chaque seconde ligne d'une première trame de chaque image et à chaque seconde ligne de l'autre trame de chaque image de la représentation de la scène, les lignes de la première trame auxquelles les signaux de composante de luminance sont relatifs étant entrelacées avec les lignes de l'autre trame auxquelles les signaux de composante de luminance sont relatifs, les signaux démultiplexés de composante de différence de couleur étant relatifs à chaque seconde ligne active de chaque trame de la représentation et ayant des types qui alternent dans chaque trame, les signaux démultiplexés de composante de différence de couleur étant relatifs pratiquement aux mêmes lignes de la première trame de chaque image que les signaux multiplexés de composante de luminance relatifs à la première trame de chaque image, et les signaux démultiplexés de composante de différence de couleur relatifs à la première des secondes lignes de chaque image étant réglés afin qu'ils aient le même type,

c) la transmission de signaux de composantes de luminance et de deux types de différence de couleur à un affichage de télévision,

caractérisé en ce que les signaux démultiplexés de composante de différence de couleur relatifs à l'autre trame de chaque image sont relatifs pratiquement aux mêmes lignes que les signaux de composante de différence de couleur relatifs à la première trame de chaque image de la représentation de la scène, chaque signal démultiplexé de composante de différence de couleur relatif à une ligne d'une trame de la représentation a un type différent de celui des signaux démultiplexés de composante de différence de couleur relatifs à la ligne correspondante des trames adjacentes, et en ce qu'il comporte en outre l'étape d'interpolation, à partir des signaux démultiplexés de composante de différence de couleur, donnant des signaux supplémentaires de composante de différence de couleur, les signaux supplémentaires de composante de différence de couleur étant relatifs à des lignes de l'image qui diffèrent des signaux démultiplexés de composante de différence de couleur.

FIELDS

LINES

FIG. 1.

FIG. 2.

$$\boxed{U} \quad v \quad \boxed{U} \quad v \quad \boxed{U}$$

$$v \quad \boxed{U} \quad v \quad \boxed{U} \quad v$$

$$\boxed{U} \quad v \quad \boxed{U} \quad v \quad \boxed{U}$$

$$v \quad \boxed{U} \quad v \quad \boxed{U} \quad v$$

## FIG. 3.

FIG. 4.

|     |     |     |     |     |     |     |     |
| --- | --- | --- | --- | --- | --- | --- | --- |
| -21 | -21 | -21 | -21 |     |     |     |     |
| -48 | -48 |     |     |     |     | -48 | -48 |
| -43 | 84 -43 | -43 | -43 |     |     | 84  |     |
|     | 256 |     | 256 |     |     |     |     |
| 64  | 426 64 | 64  | 64  |     |     | 428 |     |
| 96  | 512 96 |     | 512 |     | 96  | *   | 96  |
| 64  | 428 64 | 64  | 64  |     |     | 428 |     |
|     | 256 |     | 256 |     |     |     |     |
| -43 | 84 -43 | -43 | -43 |     |     | 84  |     |
| -48 | -48 |     |     |     |     | -48 | -48 |
| -21 | -21 | -21 | -21 |     |     |     |     |
|     | (a) |     | (b) |     |     | (c) |     |

FIG. 5.

FIG. 6.